# EUROPEAN PATENT APPLICATION

(11) **EP 4 730 489 A1**
(43) Date of publication of application: **22.04.2026**
(21) Application number: 25748989.8
(22) Date of filing: 24.01.2025
(51) Int. Cl.: H01M 10/6567, H01M 10/613, H01M 50/204

(54) **BATTERY PACK**

(30) Priority: 01.02.2024 KR 20240016112
(71) Applicant: LG Energy Solution, Ltd., Seoul 07335 (KR)
(72) Inventor: HAN, Nyeon Gu, Daejeon 34122 (KR)
(74) Representative: Plasseraud IP
(86) International application number: PCT/KR2025/001386
(87) International publication number: WO 2025/165085

(57) **Abstract**

The technical idea of the present disclosure provides a battery pack. The battery pack includes: a first side frame including a first inlet channel and a first outlet channel; a center frame including a first center channel communicating with the first inlet channel; a front frame including a first front channel communicating with the first outlet channel; a first cell assembly disposed between the center frame and the front frame; and a top cover covering the first cell assembly and including a first upper channel connecting the first center channel to the first front channel.

## Description

### [Technical Field]

The present disclosure relates to a battery pack.

This application claims the benefit of Korean Patent Application No. 10-2024-0016112, filed on February 1, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

As secondary batteries are used in mobility, there is a growing need for their safety. In the event of an accident, such as a fire, in a secondary battery used in mobility, the driver's life can be endangered, so research into technologies to improve the safety of secondary batteries is essential.

### [Summary]

### [Technical Problem]

The technical challenge of the present disclosure is to provide a battery pack.

### [Technical Solution]

To address the above challenges, the technical idea of the present disclosure provides a battery pack including: a first side frame comprising a first entrance into which an externally provided cooling fluid flows, a first inlet channel extending from the first entrance, a first exit through which the cooling fluid flows to the outside, and a first outlet channel extending from the first exit; a center frame comprising a first center channel communicating with the first inlet channel, and connected to the first side frame; a front frame comprising a first front channel communicating with the first outlet channel, and connected to the first side frame; a first cell assembly disposed between the center frame and the front frame; and a top cover disposed on the center frame and the front frame to cover the first cell assembly, and comprising a first upper channel connecting the first center channel to the first front channel, wherein the first inlet channel, the first center channel, the first upper channel, the first front channel, and the first outlet channel are sequentially in communication.

In exemplary embodiments, the first center channel includes: a first common channel in communication with the first inlet channel; and a plurality of first branch channels extending from the first common channel, the first upper channel includes a plurality of first sub-upper channels, and each of the plurality of first branch channels extends from a corresponding first sub-upper channel among the plurality of first sub-upper channels to the first common channel.

In exemplary embodiments, the first front channel includes: a first front merge channel communicating with the first outlet channel; and a plurality of first front connecting channels extending from the first front merge channel, and each of the plurality of first front connecting channels extends from a corresponding first sub-upper channel among the plurality of first sub-upper channels to the first front merge channel.

In exemplary embodiments, the battery pack further includes: a rear frame including a first rear channel communicating with the first outlet channel, and connected to the first side frame; and a second cell assembly disposed between the center frame and the rear frame, wherein the top cover further includes a second upper channel connecting the first center channel to the first rear channel, and the first inlet channel, the first center channel, the second upper channel, the first rear channel, and the first outlet channel are sequentially in communication.

In exemplary embodiments, first center channel includes: a first common channel communicating with the first inlet channel; and a plurality of first branch channels extending from the first common channel, the second upper channel includes a plurality of second sub-upper channels, and each of the plurality of first branch channels extends from a corresponding second sub-upper channel among the plurality of second sub-upper channels to the first common channel.

In exemplary embodiments, the first rear channel includes: a first rear merge channel communicating with the first outlet channel; and a plurality of first rear connecting channels extending from the first rear merge channel, and each of the plurality of first rear connecting channels extends from a corresponding second sub-upper channel among the plurality of second sub-upper channels to the first rear merge channel.

In exemplary embodiments, a cooling fluid discharged from the first center channel is separated into the first upper channel and the second upper channel.

In exemplary embodiments, the battery pack further includes: a base plate supporting the first cell assembly and the second cell assembly, wherein the base plate includes a lower channel configured to allow the cooling fluid to flow.

In exemplary embodiments, the lower channel communicates with at least one among the first center channel, the first front channel, and the first rear channel.

In exemplary embodiments, the battery pack further includes: a second side frame comprising a second entrance into which the externally provided cooling fluid flows, a second inlet channel extending from the second entrance, a second exit through which the cooling fluid flows to the outside, and a second outlet channel extending from the second exit; and a third cell assembly disposed between the center frame and the front frame, wherein the center frame and the front frame each extend from the first side frame to the second side frame, the center frame further comprises a second center channel communicating with the second inlet channel, the front frame further comprises a second front channel communicating with the second outlet channel, the top cover further comprises a third upper channel connecting the second center channel to the second front channel, and the second inlet channel, the second center channel, the third upper channel, the second front channel, and the second outlet channel are sequentially in communication.

In exemplary embodiments, the second center channel includes: a second common channel communicating with the second inlet channel; and a plurality of second branch channels extending from the second common channel, the third upper channel includes a plurality of third sub-upper channels, and each of the plurality of second branch channels extends from a corresponding third sub-upper channel among the plurality of third sub-upper channels to the second common channel.

In exemplary embodiments, the second front channel includes: a second front merge channel communicating with the second outlet channel; and a plurality of second front connecting channels extending from the second front merge channel, and each of the plurality of second front connecting channels extends from a corresponding third sub-upper channel among the plurality of third sub-upper channels to the second front merge channel.

In exemplary embodiments, the battery pack further includes: a rear frame including a second rear channel communicating with the second outlet channel, and extending from the first side frame to the second side frame; and a fourth cell assembly disposed between the center frame and the rear frame, wherein the top cover further includes a fourth upper channel connecting the second center channel to the second rear channel, and the second inlet channel, the second center channel, the fourth upper channel, the second rear channel, and the second outlet channel are sequentially in communication.

In exemplary embodiments, the second center channel includes: a second common channel communicating with the second inlet channel; and a plurality of second branch channels extending from the second common channel, the second rear channel includes: a second rear merge channel communicating with the second outlet channel; and a plurality of second rear connecting channels extending from the second rear merge channel, the fourth upper channel includes a plurality of fourth sub-upper channels, and each of the plurality of fourth sub-upper channels extends from a corresponding second branch channel among the plurality of second branch channels to a corresponding second rear connecting channel among the plurality of second rear connecting channels.

In exemplary embodiments, the cooling fluid discharged from the second center channel is separated into the third upper channel and the fourth upper channel.

### [Advantageous Effects]

A battery pack according to exemplary embodiments of the present disclosure can provide multi-sided cooling for each of a plurality of cell assemblies mounted in the pack housing, thereby improving cooling performance for the battery cells. The heat generation of the battery cells can be effectively controlled, thereby improving the safety of the battery pack.

According to exemplary embodiments of the present disclosure, a center frame, a front frame, or a rear frame having a cooling channel near an end of the battery cell provided with electrode leads is disposed, so that the end of the battery cell with relatively large heat generation can be effectively cooled and the temperature deviation of the battery cell can be reduced.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is an exploded perspective view illustrating a battery pack according to exemplary embodiments of the present disclosure.
FIG. 2 is a top view of a portion of a battery pack.
FIG. 3 is a top view of a portion of a battery pack.
FIG. 4 is a cross-sectional view of a battery pack according to lines IV-IV' of FIG. 1.
FIG. 5 is a cross-sectional view of a battery pack according to lines V-V' of FIG. 1.
FIG. 6 is a cross-sectional view of a battery pack according to lines VI- VI' of FIG. 1.
FIG. 7 is a cross-sectional view of a battery pack according to lines VII-VII' of FIG. 1.
FIG. 8 is a perspective view illustrating a portion of a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

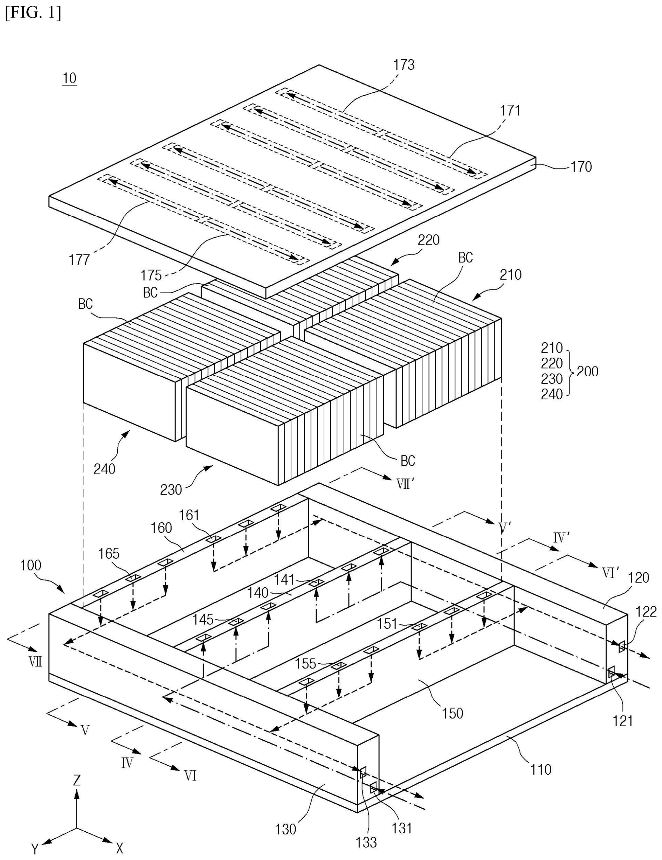

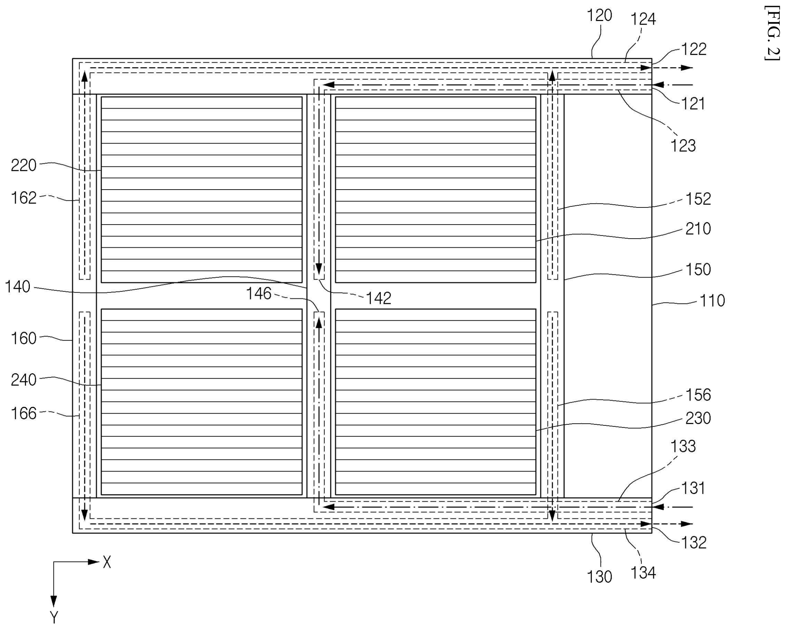

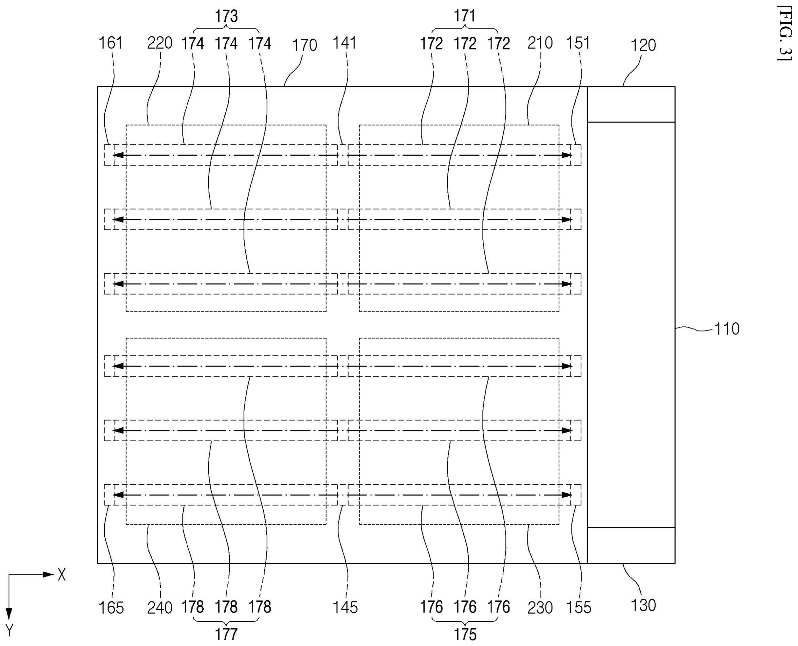

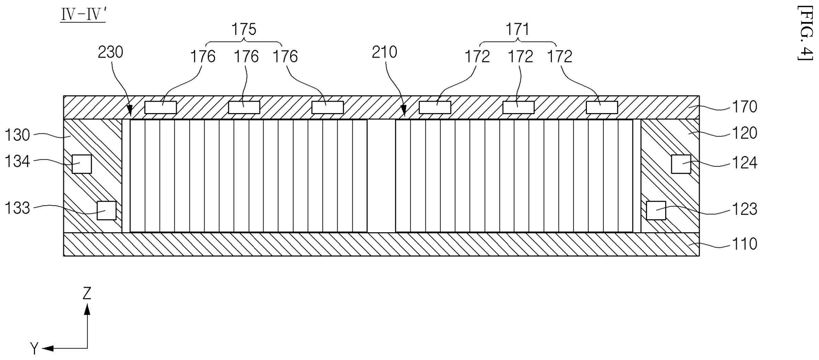

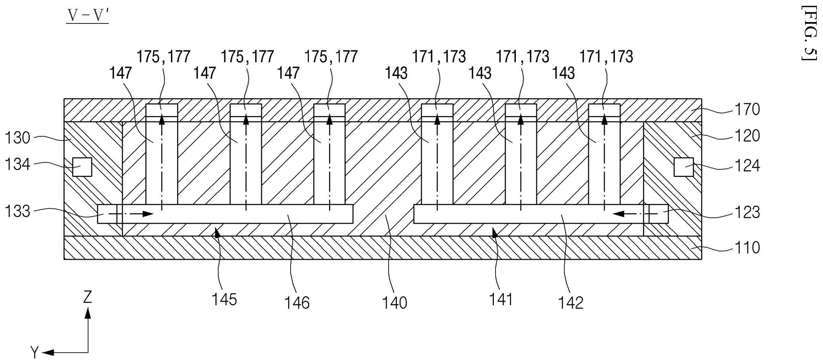

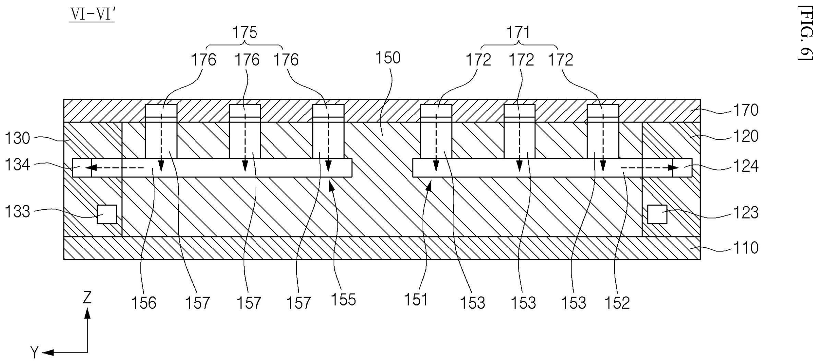

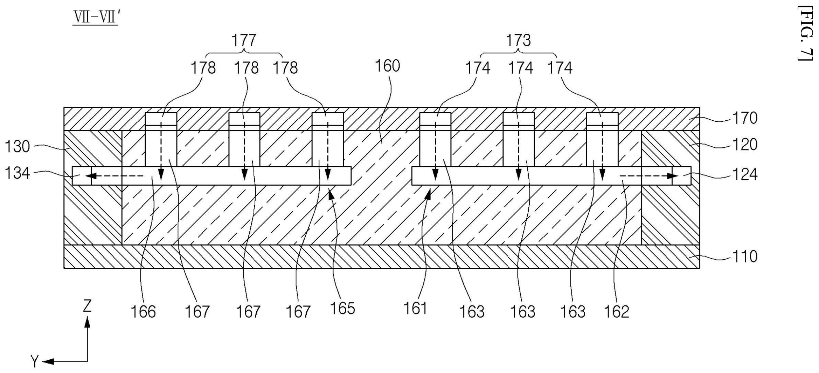

FIG. 1 is an exploded perspective view illustrating a battery pack 10 according to exemplary embodiments of the present disclosure. FIG. 2 is a top view illustrating a portion of the battery pack 10. FIG. 3 is a top view illustrating a portion of the battery pack 10. FIG. 4 is a cross-sectional view of the battery pack 10 according to lines IV-IV' of FIG. 1. FIG. 5 is a cross-sectional view of the battery pack 10 according to lines V-V' of FIG. 1. FIG. 6 is a cross-sectional view of the battery pack 10 according to lines VI- VI' of FIG. 1. FIG. 7 is a cross-sectional view of the battery pack 10 according to lines VII-VII' of FIG. 1.

Referring to FIGS. 1 through 7, a battery pack 10 may include a pack housing 100 and a plurality of cell assemblies 200. The pack housing 100 may have an internal space for accommodating the plurality of cell assemblies 200, and the plurality of cell assemblies 200 may be mounted to the pack housing 100.

The plurality of cell assemblies 200 may be arranged in a first horizontal direction (e.g., X direction) and a second horizontal direction (e.g., Y direction) within the pack housing 100. The plurality of cell assemblies 200 may be electrically connected to each other via conductors, such as busbars. For example, the plurality of cell assemblies 200 may include first to fourth cell assemblies 210, 220, 230, 240. While the battery pack 10 is illustrated as including four cell assemblies 200, it is not limited thereto, and the number of cell assemblies 200 provided in the battery pack 10 may be one, two or more. Each of the plurality of cell assemblies 200 may correspond to a battery module or a cell-to-pack structure.

The plurality of cell assemblies 200 may each include a plurality of battery cells (BCs). The individual battery cells (BCs) are the basic unit of a lithium-ion battery, i.e., a secondary battery. An individual battery cell (BC) may include an electrode assembly, an electrolyte, and a cell case. The electrode assembly, which is embedded in the cell case, may include a positive electrode, a negative electrode, and a separator interposed between the positive electrode and the negative electrode. The electrode assembly may be one of a jelly-roll type and a stack-type, depending on the form of assembly. A jelly-roll type electrode assembly may include a winding structure of a positive electrode, a negative electrode, and a separator interposed between them. A stack-type electrode assembly may include a plurality of positive electrodes and a plurality of negative electrodes stacked in sequence, and a plurality of separators interposed therebetween. The positive electrodes may include a positive electrode current collector and a positive electrode active material. The negative electrodes may include a negative electrode current collector and a negative electrode active material.

The plurality of battery cells (BCs) may be connected in series and/or parallel. In one example, the plurality of battery cells (BCs) may be connected in series with each other. In one example, the plurality of battery cells (BCs) may be connected in parallel to each other. In one example, when defining a set of two or more battery cells (BCs) connected in parallel to each other as a bank, one bank of two or more battery cells (BCs) connected in parallel to each other and another bank of two or more battery cells (BCs) connected in series with each other may be connected in parallel to each other.

The individual battery cells (BCs) may correspond to pouch-type battery cells, cylindrical battery cells, or prismatic battery cells. The electrode assembly of a pouch-type battery cell is embedded in a pouch case including an aluminum laminated sheet. The electrode assembly of a cylindrical battery cell is embedded in a cylindrical metal can. The electrode assembly of a prismatic battery cell is embedded in a prismatic metal can.

In exemplary embodiments, the plurality of cell assemblies 200 may each include battery cells (BCs) stacked in one direction. In each of the plurality of cell assemblies 200, adjacent battery cells (BCs) of the plurality of battery cells (BCs) may be fixed to each other via an adhesive member, such as adhesive tape. In exemplary embodiments, in each of the plurality of cell assemblies 200, the plurality of battery cells (BCs) may be stacked in a second horizontal direction (e.g., Y direction), and individual battery cells (BCs) may extend in a first horizontal direction (e.g., X direction). At least one of the two ends along the first horizontal direction (e.g., the X direction) of the individual battery cells (BCs) may be provided with electrode leads. The electrode leads of neighboring battery cells (BCs) may be physically coupled.

When viewed from a plane, the plurality of cell assemblies 200 may each have a rectangular shape. The plurality of cell assemblies 200 may each include an upper surface and a bottom surface that are opposed in a vertical direction (e.g., Z direction), a first side and a second side that are opposed to each other in a first horizontal direction (e.g., X direction), and a third side and a fourth side that are opposed to each other in a second horizontal direction (e.g., Y direction). The upper surface of each of the plurality of cell assemblies 200 may include the upper surfaces of a plurality of battery cells (BCs), and the bottom surface of each of the plurality of cell assemblies 200 may include the bottom surfaces of a plurality of battery cells (BCs).

A pack housing 100 may include a base plate 110, a first side frame 120, a second side frame 130, a center frame 140, a front frame 150, a rear frame 160, and a top cover 170.

The base plate 110 may support a plurality of cell assemblies 200. The base plate 110 may have a flat plate shape extending in a first horizontal direction (e.g., X direction) and a second horizontal direction (e.g., Y direction). When viewed in plan, the base plate 110 may have a roughly square flat plate shape.

In exemplary embodiments, a thermally conductive adhesive layer may be interposed between each of the plurality of cell assemblies 200 and the base plate 110. The plurality of cell assemblies 200 may each be thermally and physically coupled to the base plate 110 by the thermally conductive adhesive layer. For example, the thermally conductive adhesive layer may include a thermal resin and/or a thermal interface material.

The first side frame 120 and the second side frame 130 may be disposed on the base plate 110. The first side frame 120 and the second side frame 130 may each extend in a first horizontal direction (e.g., the X direction) on the base plate 110. The first side frame 120 and the second side frame 130 may be spaced apart in a second horizontal direction (e.g., Y-direction) with the plurality of cell assemblies 200 in between.

The center frame 140, the front frame 150, and the rear frame 160 may be disposed on the base plate 110. The center frame 140, front frame 150, and rear frame 160 may each extend in a second horizontal direction (e.g., Y direction) from the first side frame 120 to the second side frame 130. The front frame 150 may be spaced apart from the rear frame 160 in a first horizontal direction (e.g., X direction) with the center frame 140 in between. The first cell assembly 210 and the third cell assembly 230 may be disposed between the front frame 150 and the center frame 140, and may be arranged in a second horizontal direction (e.g., Y direction) between the first side frame 120 and the second side frame 130. The second cell assembly 220 and the fourth cell assembly 240 may be disposed between the rear frame 160 and the center frame 140, and may be arranged in a second horizontal direction (e.g., Y direction) between the first side frame 120 and the second side frame 130.

The top cover 170 may be disposed on the first side frame 120, the second side frame 130, the center frame 140, the front frame 150, and the rear frame 160, and may cover the plurality of cell assemblies 200. For example, the top cover 170 may be fastened to each of the first side frame 120, the second side frame 130, the center frame 140, the front frame 150, and the rear frame 160 via fastening bolts. The top cover 170 may have a flat plate shape extending in a first horizontal direction (e.g., X direction) and a second horizontal direction (e.g., Y direction). When viewed in plan, the top cover 170 may have a roughly square flat plate shape.

In exemplary embodiments, a thermally conductive adhesive layer may be interposed between each of the plurality of cell assemblies 200 and the top cover 170. The plurality of cell assemblies 200 may each be thermally and physically coupled to the top cover 170 by the thermally conductive adhesive layer. For example, the thermally conductive adhesive layer may include a thermal resin and/or a thermal interface material.

In embodiments, the battery pack 10 may have a multi-sided cooling structure configured to perform multi-sided cooling for each of the plurality of cell assemblies 200. The multi-sided cooling structure may be achieved by the pack housing 100 having cooling channels configured to allow cooling fluid to flow therein. For example, the multi-sided cooling structure may be achieved by two or more components selected from the base plate 110, the first side frame 120, the second side frame 130, the center frame 140, the front frame 150, the rear frame 160, and the top cover 170 having cooling channels configured to flow cooling fluid therein. The cooling fluid may be provided from an external source configured to supply the cooling fluid. The cooling fluid supplied from the external source may flow along the cooling channels provided in the pack housing 100, and may then be returned to the external source. As the cooling fluid flows, cooling of each of the plurality of cell assemblies 200 may be achieved. The cooling fluid may include a coolant and/or a refrigerant.

In the following, a multi-sided cooling structure of the battery pack 10 according to exemplary embodiments will be described. In FIGS. 1 to 3 and FIGS. 5 to 7, flow paths of cooling fluid flowing along cooling channels of the pack housing 100 are shown in solid and dashed lines.

The first side frame 120 may include a first entrance 121 into which an externally provided cooling fluid flows, a first inlet channel 123 extending from the first entrance 121, a first exit 122 through which the cooling fluid flows to the outside, and a first outlet channel 124 extending from the first exit 122. The first inlet channel 123 and the first outlet channel 124 may be spaced apart from each other within the first side frame 120, and the first inlet channel 123 and the first outlet channel 124 may each extend in a first horizontal direction (e.g., the X direction).

The second side frame 130 may include a second entrance 131 into which an externally provided cooling fluid flows, a second inlet channel 133 extending from the second entrance 131, a second exit 132 through which the cooling fluid flows to the outside, and a second outlet channel 134 extending from the second exit 132. The second inlet channel 133 and the second outlet channel 134 may be spaced apart from each other within the second side frame 130, and the second inlet channel 133 and the second outlet channel 134 may each extend in a first horizontal direction (e.g., the X direction).

The center frame 140 may include a first center channel 141 communicating with the first inlet channel 123 and a second center channel 145 communicating with the second inlet channel 133.

The first center channel 141 may be disposed on one side of the first cell assembly 210 and on one side of the second cell assembly 220. The first center channel 141 may include a first common channel 142 communicating with the first inlet channel 123 and a plurality of first branch channels 143 extending from the first common channel 142. The first common channel 142 may extend from the first inlet channel 123 in a second horizontal direction (e.g., Y direction). The plurality of first branch channels 143 may be spaced apart from each other in the second horizontal direction (e.g., Y direction). The plurality of first branch channels 143 may each extend in a vertical direction (e.g., Z direction) from the first common channel 142.

The second center channel 145 may be disposed on one side of the third cell assembly 230 and on one side of the fourth cell assembly 240. The second center channel 145 may include a second common channel 146 communicating with the second inlet channel 133 and a plurality of second branch channels 147 extending from the second common channel 146. The second common channel 146 may extend in a second horizontal direction (e.g., Y direction) from the second inlet channel 133. The plurality of second branch channels 147 may be spaced apart from each other in the second horizontal direction (e.g., Y direction). The plurality of second branch channels 147 may each extend in a vertical direction (e.g., Z direction) from the second common channel 146.

The front frame 150 may include a first front channel 151 communicating with the first outlet channel 124 and a second front channel 155 communicating with the second outlet channel 134.

The first front channel 151 may be disposed on one side of the first cell assembly 210. The first front channel 151 may include a first front merge channel 152 communicating with the first outlet channel 124 and a plurality of first front connecting channels 153 extending from the first front merge channel 152. The first front merge channel 152 may extend from the first outlet channel 124 in a second horizontal direction (e.g., Y direction). The plurality of first front connecting channels 153 may be spaced apart from each other in the second horizontal direction (e.g., Y direction). The plurality of first front connecting channels 153 may each extend in a vertical direction (e.g., Z direction) from the first front merge channel 152. Cooling fluids provided in the plurality of first front connecting channels 153 may merge in the first front merge channel 152.

The second front channel 155 may be disposed on one side of the third cell assembly 230. The second front channel 155 may include a second front merge channel 156 communicating with the second outlet channel 134 and a plurality of second front connecting channels 157 extending from the second front merge channel 156. The second front merge channel 156 may extend from the second outlet channel 134 in a second horizontal direction (e.g., Y direction). The plurality of second front connecting channels 157 may be spaced apart from each other in the second horizontal direction (e.g., Y direction). The plurality of second front connecting channels 157 may each extend in a vertical direction (e.g., Z direction) from the second front merge channel 156. Cooling fluids provided in the plurality of second front connecting channels 157 may merge in the second front merge channel 156.

The rear frame 160 may include a first rear channel 161 communicating with the first outlet channel 124 and a second rear channel 165 communicating with the second outlet channel 134.

The first rear channel 161 may be disposed on one side of the second cell assembly 220. The first rear channel 161 may include a first rear merge channel 162 communicating with the first outlet channel 124 and a plurality of first rear connecting channels 163 extending from the first rear merge channel 162. The first rear merge channel 162 may extend from the first outlet channel 124 in a second horizontal direction (e.g., Y direction). The plurality of first rear connecting channels 163 may be spaced apart from each other in the second horizontal direction (e.g., Y direction). The plurality of first rear connecting channels 163 may each extend in a vertical direction (e.g., Z direction) from the first rear merge channel162. Cooling fluids provided in the plurality of first rear connecting channels 163 may merge in the first rear merge channel 162.

The second rear channel 165 may be disposed on one side of the fourth cell assembly 240. The second rear channel 165 may include a second rear merge channel 166 communicating with the second outlet channel 134 and a plurality of second rear connecting channels 167 extending from the second rear merge channel 166. The second rear merge channel 166 may extend from the second outlet channel 134 in a second horizontal direction (e.g., Y direction). The plurality of second rear connecting channels 167 may be spaced apart from each other in the second horizontal direction (e.g., Y direction). The plurality of second rear connecting channels 167 may each extend in a vertical direction (e.g., Z direction) from the second rear merge channel 166. Cooling fluids provided in the plurality of second rear connecting channels 167 may merge in the second rear merge channel 166.

The top cover 170 may include a first upper channel 171 extending between the first center channel 141 and the first front channel 151, a second upper channel 173 extending between the first center channel 141 and the first rear channel 161, a third upper channel 175 extending between the second center channel 145 and the second front channel 155, and a fourth upper channel 177 extending between the second center channel 145 and the second rear channel 165.

The first upper channel 171 may be vertically overlapped with the first cell assembly 210. The first upper channel 171 can deliver cooling fluid from the first center channel 141 to the first front channel 151. The first upper channel 171 may include a plurality of first sub-upper channels 172 spaced apart in a second horizontal direction (e.g., Y direction). The plurality of first sub-upper channels 172 may each extend in a first horizontal direction (e.g., X direction). The plurality of first sub-upper channels 172 may each extend from a corresponding first branch channel 143 among the plurality of first branch channels 143 to a corresponding first front connecting channel 153 among the plurality of first front connecting channels 153.

The second upper channel 173 may be vertically overlapped with the second cell assembly 220. The second upper channel 173 may deliver cooling fluid from the first center channel 141 to the first rear channel 161. The second upper channel 173 may include a plurality of second sub-upper channels 174 spaced apart in a second horizontal direction (e.g., Y direction). The plurality of second sub-upper channels 174 may each extend in a first horizontal direction (e.g., X direction). The plurality of second sub-upper channels 174 may each extend from a corresponding first branch channel 143 among the plurality of first branch channels 143 to a corresponding first rear connecting channel 163 among the plurality of first rear connecting channels 163.

In exemplary embodiments, the first upper channel 171 and the second upper channel 173 may be connected. In this case, the first upper channel 171 and the second upper channel 173 may each be connected to the first center channel 141, and cooling fluid flowing out of the first center channel 141 may be separated into the first upper channel 171 and the second upper channel 173. The plurality of first sub-upper channels 172 may each be connected to a corresponding second sub-upper channel 174 among the plurality of second sub-upper channels 174. In this case, a portion of the cooling fluid outflowing from the first branch channel 143 may flow forward along the first sub-upper channel 172, and a remaining portion of the cooling fluid outflowing from the first branch channel 143 may flow backward along the second sub-upper channel 174.

The third upper channel 175 may be vertically overlapped with the third cell assembly 230. The third upper channel 175 may deliver cooling fluid from the second center channel 145 to the second front channel 155. The third upper channel 175 may include a plurality of third sub-upper channels 176 spaced apart in a second horizontal direction (e.g., Y direction). The plurality of third sub-upper channels 176 may each extend in a first horizontal direction (e.g., X direction). The plurality of third sub-upper channels 176 may each extend from a corresponding second branch channel 147 among the plurality of second branch channels 147 to a corresponding second front connecting channel 157 among the plurality of second front connecting channels 157.

The fourth upper channel 177 may be vertically overlapped with the fourth cell assembly 240. The fourth upper channel 177 may deliver cooling fluid from the second center channel 145 to the second rear channel 165. The fourth upper channel 177 may include a plurality of fourth sub-upper channels 178 spaced apart in a second horizontal direction (e.g., Y direction). The plurality of fourth sub-upper channels 178 may each extend in a first horizontal direction (e.g., X direction). The plurality of fourth sub-upper channels 178 may each extend from a corresponding second branch channel 147 among the plurality of second branch channels 147 to a corresponding second rear connecting channel 167 among the plurality of second rear connecting channels 167.

In exemplary embodiments, the third upper channel 175 and the fourth upper channel 177 may be connected. In this case, the third upper channel 175 and the fourth upper channel 177 may each be connected to the second center channel 145, and cooling fluid flowing out of the second center channel 145 may be separated into the third upper channel 175 and the fourth upper channel 177. Each of the plurality of third sub-upper channels 176 may be connected to a corresponding fourth sub-upper channel 178 among the plurality of fourth sub-upper channels 178. In this case, a portion of the cooling fluid outflowing from the second branch channel 147 may flow forward along the third sub-upper channel 176, and a remaining portion of the cooling fluid outflowing from the second branch channel 147 may flow backward along the fourth sub-upper channel 178.

In embodiments, the first inlet channel 123, the first center channel 141, the first upper channel 171, the first front channel 151, and the first outlet channel 124 may be sequentially in communication. The first inlet channel 123, the first center channel 141, the first upper channel 171, the first front channel 151, and the first outlet channel 124 may comprise a first integrated cooling channel extending from the first entrance 121 to the first exit 122. As cooling fluid flows along the first integrated cooling channel, cooling fluid may flow around the upper surface and three sides of the first cell assembly 210, thereby cooling the first cell assembly 210.

In embodiments, the first inlet channel 123, the first center channel 141, the second upper channel 173, the first rear channel 161, and the first outlet channel 124 may be sequentially in communication. The first inlet channel 123, the first center channel 141, the second upper channel 173, the first rear channel 161, and the first outlet channel 124 may comprise a second integrated cooling channel extending from the first entrance 121 to the first exit 122. As the cooling fluid flows along the second integrated cooling channel, cooling may be achieved for the second cell assembly 220 as the cooling fluid flows around the upper surface and three sides of the second cell assembly 220.

In embodiments, the second inlet channel 133, the second center channel 145, the third upper channel 175, the second front channel 155, and the second outlet channel 134 may be sequentially in communication. The second inlet channel 133, the second center channel 145, the third upper channel 175, the second front channel 155, and the second outlet channel 134 may comprise a third integrated cooling channel extending from the second entrance 131 to the second exit 132. The third integrated cooling channel may be separate from the first integrated cooling channel and the second integrated cooling channel, and the cooling fluid flowing along the third integrated cooling channel may not mix with the cooling fluid flowing along the first integrated cooling channel and the cooling fluid flowing along the second integrated cooling channel. While the cooling fluid flows along the third integrated cooling channel, cooling of the third cell assembly 230 may occur as the cooling fluid flows around the upper surface and three sides of the third cell assembly 230.

In embodiments, the second inlet channel 133, the second center channel 145, the fourth upper channel 177, the second rear channel 165, and the second outlet channel 134 may be sequentially in communication. The second inlet channel 133, the second center channel 145, the fourth upper channel 177, the second rear channel 165, and the second outlet channel 134 may comprise a fourth integrated cooling channel extending from the second entrance 131 to the second exit 132. The fourth integrated cooling channel may be separate from the first integrated cooling channel and the second integrated cooling channel, and cooling fluid flowing along the fourth integrated cooling channel may not mix with cooling fluid flowing along the first integrated cooling channel and cooling fluid flowing along the second integrated cooling channel. While the cooling fluid flows along the fourth integrated cooling channel, cooling of the fourth cell assembly 240 may occur as the cooling fluid flows around the upper surface and three sides of the fourth cell assembly 240.

According to the battery pack 10 according to exemplary embodiments of the present disclosure, multi-sided cooling can be performed for each of the plurality of cell assemblies 200 mounted in the pack housing 100, thereby improving cooling performance for the battery cells BC. By effectively controlling the heating of the battery cells BC, the safety of the battery pack 10 can be improved.

According to exemplary embodiments of the present disclosure, a center frame 140, a front frame 150, or a rear frame 160 having a cooling channel is disposed near an end of the battery cell BC provided with electrode leads, so that the end of the battery cell BC, which generates relatively more heat, can be effectively cooled and the temperature deviation of the battery cell BC can be reduced.

### (Second embodiment)

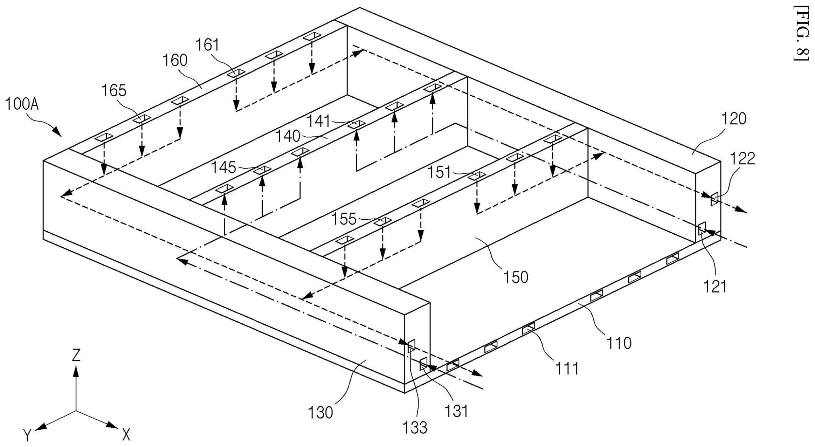

FIG. 8 is a perspective view illustrating a portion of a battery pack according to exemplary embodiments of the present disclosure. In the following, the battery pack illustrated in FIG. 8 will be described with reference to its differences from the battery packs described with reference to FIGS. 1 through 7.

Referring to FIG. 8, in the pack housing 100A of the battery pack, the base plate 110 may include a plurality of lower channels 111 configured to allow cooling fluid to flow. The plurality of lower channels 111 may each extend in a first horizontal direction (e.g., the X direction).

In exemplary embodiments, the plurality of lower channels 111 may be in communication with at least one among cooling channels in the center frame 140 (i.e., a first center channel 141 and a second center channel 145), cooling channels in the front frame 150 (i.e., a first front channel 151 and a second front channel 155), and cooling channels in the rear frame 160 (i.e., a first rear channel 161 and a second rear channel 165).

In exemplary embodiments, the plurality of lower channels 111 may be in communication with cooling channels in the center frame 140. In this case, cooling fluid may be provided to the entrances of the individual lower channels 111 provided at the ends of the base plate 110. The cooling fluid supplied to the entrances of the individual lower channels 111 may flow along the individual lower channels 111 and then flow into the cooling channels of the center frame 140. Cooling fluid provided from the lower channels 111 of some of the plurality of lower channels 111 and cooling fluid provided from the first inlet channel 123 of the first side frame 120 may merge at the first center channel 141. In addition, the cooling fluid provided from the lower channel 111 of another portion of the plurality of lower channels 111 and the cooling fluid provided from the second inlet channel 133 of the second side frame 130 may merge at the second center channel 145.

In exemplary embodiments, the plurality of lower channels 111 may be in communication with cooling channels in the front frame 150. In this case, cooling fluid may be discharged from exits of the individual lower channels 111 provided at the ends of the base plate 110. The cooling fluid provided from the top cover 170 is separated within the front frame 150, and a portion of the cooling fluid may be directed to the first outlet channel 124 of the first side frame 120 and the second outlet channel 134 of the second side frame 130, while the remaining portion of the cooling fluid may be directed to the lower channels 111 of the base plate 110. When cooling fluid is delivered from the first upper channel 171 of the top cover 170 to the first front channel 151, a portion of the cooling fluid may be delivered to the first outlet channel 124 of the first side frame 120, and a remaining portion of the cooling fluid may be delivered to the lower channel 111 of some of the plurality of lower channels 111. In addition, when cooling fluid is delivered from the third upper channel 175 of the top cover 170 to the second front channel 155, a portion of the cooling fluid may be delivered to the second outlet channel 134 of the second side frame 130, and another portion of the cooling fluid may be delivered to the lower channel 111 of some of the plurality of lower channels 111.

In exemplary embodiments, the plurality of lower channels 111 may be in communication with cooling channels in the rear frame 160. In this case, cooling fluid may be discharged from exits of the individual lower channels 111 provided at the ends of the base plate 110. The cooling fluid provided from the top cover 170 is separated within the rear frame 160, and a portion of the cooling fluid may be directed to the first outlet channel 124 of the first side frame 120 and the second outlet channel 134 of the second side frame 130, while the remaining portion of the cooling fluid may be directed to the lower channels 111 of the base plate 110. When cooling fluid is delivered from the second upper channel 173 of the top cover 170 to the first rear channel 161, a portion of the cooling fluid may be delivered to the first outlet channel 124 of the first side frame 120, and a remaining portion of the cooling fluid may be delivered to the lower channel 111 of some of the plurality of lower channels 111. In addition, when cooling fluid is delivered from the fourth upper channel 177 of the top cover 170 to the second rear channel 165, a portion of the cooling fluid may be delivered to the second outlet channel 134 of the second side frame 130, and a remaining portion of the cooling fluid may be delivered to the lower channel 111 of some of the plurality of lower channels 111.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery pack comprising:
a first side frame comprising a first entrance into which an externally provided cooling fluid flows, a first inlet channel extending from the first entrance, a first exit through which the cooling fluid flows to the outside, and a first outlet channel extending from the first exit;
a center frame comprising a first center channel communicating with the first inlet channel, and connected to the first side frame;
a front frame comprising a first front channel communicating with the first outlet channel, and connected to the first side frame;
a first cell assembly disposed between the center frame and the front frame; and
a top cover disposed on the center frame and the front frame to cover the first cell assembly, and comprising a first upper channel connecting the first center channel to the first front channel, wherein
the first inlet channel, the first center channel, the first upper channel, the first front channel, and the first outlet channel are sequentially in communication.

2. The battery pack of claim 1, wherein
the first center channel comprises:
a first common channel in communication with the first inlet channel; and
a plurality of first branch channels extending from the first common channel,
the first upper channel comprises a plurality of first sub-upper channels, and
each of the plurality of first branch channels extends from a corresponding first sub-upper channel among the plurality of first sub-upper channels to the first common channel.

3. The battery pack of claim 2, wherein
the first front channel comprises:
a first front merge channel communicating with the first outlet channel; and
a plurality of first front connecting channels extending from the first front merge channel, and
each of the plurality of first front connecting channels extends from a corresponding first sub-upper channel among the plurality of first sub-upper channels to the first front merge channel.

4. The battery pack of claim 1, further comprising:
a rear frame comprising a first rear channel communicating with the first outlet channel, and connected to the first side frame; and
a second cell assembly disposed between the center frame and the rear frame, wherein
the top cover further comprises a second upper channel connecting the first center channel to the first rear channel, and
the first inlet channel, the first center channel, the second upper channel, the first rear channel, and the first outlet channel are sequentially in communication.

5. The battery pack of claim 4, wherein
the first center channel comprises:
a first common channel communicating with the first inlet channel; and
a plurality of first branch channels extending from the first common channel,
the second upper channel comprises a plurality of second sub-upper channels, and
each of the plurality of first branch channels extends from a corresponding second sub-upper channel among the plurality of second sub-upper channels to the first common channel.

6. The battery pack of claim 5, wherein
the first rear channel comprises:
a first rear merge channel communicating with the first outlet channel; and
a plurality of first rear connecting channels extending from the first rear merge channel, and
each of the plurality of first rear connecting channels extends from a corresponding second sub-upper channel among the plurality of second sub-upper channels to the first rear merge channel.

7. The battery pack of claim 4, wherein
a cooling fluid discharged from the first center channel is separated into the first upper channel and the second upper channel.

8. The battery pack of claim 4, further comprising:
a base plate supporting the first cell assembly and the second cell assembly, wherein
the base plate comprises a lower channel configured to allow the cooling fluid to flow.

9. The battery pack of claim 8 wherein
the lower channel communicates with at least one among the first center channel, the first front channel, and the first rear channel.

10. The battery pack of claim 1, further comprising:
a second side frame comprising a second entrance into which the externally provided cooling fluid flows, a second inlet channel extending from the second entrance, a second exit through which the cooling fluid flows to the outside, and a second outlet channel extending from the second exit; and
a third cell assembly disposed between the center frame and the front frame, wherein
the center frame and the front frame each extend from the first side frame to the second side frame,
the center frame further comprises a second center channel communicating with the second inlet channel,
the front frame further comprises a second front channel communicating with the second outlet channel,
the top cover further comprises a third upper channel connecting the second center channel to the second front channel, and
the second inlet channel, the second center channel, the third upper channel, the second front channel, and the second outlet channel are sequentially in communication.

11. The battery pack of claim 10, wherein
the second center channel comprises:
a second common channel communicating with the second inlet channel; and
a plurality of second branch channels extending from the second common channel,
the third upper channel comprises a plurality of third sub-upper channels, wherein
each of the plurality of second branch channels extends from a corresponding third sub-upper channel among the plurality of third sub-upper channels to the second common channel.

12. The battery pack of claim 11, wherein
the second front channel comprises:
a second front merge channel communicating with the second outlet channel; and
a plurality of second front connecting channels extending from the second front merge channel, and
each of the plurality of second front connecting channels extends from a corresponding third sub-upper channel among the plurality of third sub-upper channels to the second front merge channel.

13. The battery pack of claim 10, further comprising:
a rear frame comprising a second rear channel communicating with the second outlet channel, and extending from the first side frame to the second side frame; and
a fourth cell assembly disposed between the center frame and the rear frame, wherein
the top cover further comprises a fourth upper channel connecting the second center channel to the second rear channel, and
the second inlet channel, the second center channel, the fourth upper channel, the second rear channel, and the second outlet channel are sequentially in communication.

14. The battery pack of claim 13, wherein
the second center channel comprises:
a second common channel communicating with the second inlet channel; and
a plurality of second branch channels extending from the second common channel,
the second rear channel comprises:
a second rear merge channel communicating with the second outlet channel; and
a plurality of second rear connecting channels extending from the second rear merge channel,
the fourth upper channel comprises a plurality of fourth sub-upper channels, and
each of the plurality of fourth sub-upper channels extends from a corresponding second branch channel among the plurality of second branch channels to a corresponding second rear connecting channel among the plurality of second rear connecting channels.

15. The battery pack of claim 14, wherein
the cooling fluid discharged from the second center channel is separated into the third upper channel and the fourth upper channel.
